# FASCICULE DE BREVET EUROPEEN

(11) **EP 2 758 341 B1**
(45) Date de publication et mention de la délivrance du brevet: **11.03.2020**
(21) Numéro de dépôt: 12775727.6
(22) Date de dépôt: 13.09.2012
(51) Int. Cl.: H01M 4/36, C01B 33/02

(54) **PROCÉDÉ DE FABRICATION D'UN MATÉRIAU COMPOSITE SILICIUM/CARBONE ET UTILISATION D'UN TEL MATÉRIAU**
VERFAHREN ZUR HERSTELLUNG EINES SILICIUM-/KOHLENSTOFFVERBUNDMATERIALS UND VERWENDUNG EINES DERARTIGEN MATERIALS
METHOD OF PRODUCING A SILICON/CARBON COMPOSITE MATERIAL AND USE OF SUCH A MATERIAL

(30) Priorité: 20.09.2011 FR 1102846
(43) Date de publication de la demande: 30.07.2014
(73) Titulaire: Commissariat à l'Énergie Atomique et aux Énergies Alternatives, 75015 Paris (FR); Centre National de la Recherche Scientifique, 75794 Paris Cedex 16 (FR); Université d'Orléans, 45067 Orléans Cedex 2 (FR)
(72) Inventeur: PAIREAU, Cyril, 44115 Haute Goulaine (FR); JOUANNEAU-SI LARBI, Séverine, 38590 Sillans (FR); BEGUIN, François, 45160 Olivet (FR); RAYMUNDO-PINERO, Encarnacion, 45100 Orléans (FR)
(74) Mandataire: Talbot, Alexandre
(86) Numéro de dépôt international: PCT/FR2012/000365
(87) Numéro de publication internationale: WO 2013/041780

(56) Documents cités:
- WO-A2-2010/029135
- XING FAN ET AL: "Electrospinning preparation of nanosilicon/disordered carbon composite as anode materials in Li-Ion battery", ELECTROCHEMICAL AND SOLID-STATE LETTERS ELECTROCHEMICAL SOCIETY INC. USA, vol. 12, no. 10, octobre 2009 (2009-10), pages A199-A201, XP002673407, ISSN: 1099-0062 cité dans la demande
- DOH C-H ET AL: "Synthesis of silicon-carbon by polyaniline coating and electrochemical properties of the Si-C / Li cell", BULLETIN OF THE KOREAN CHEMICAL SOCIETY 20060820 KOREAN CHEMICAL SOCIETY KR, vol. 27, no. 8, 20 août 2006 (2006-08-20), pages 1175-1180, XP002673408,
- DATABASE CA [Online] CHEMICAL ABSTRACTS SERVICE, COLUMBUS, OHIO, US; 30 novembre 2006 (2006-11-30), ZHANG, TAO ET AL: "Silicon/carbon core-shell structured nano composite material for secondary lithium battery anode and its manufacture", XP002673409, extrait de STN Database accession no. 145:474754 & CN 1 800 094 A (FUDAN UNIVERSITY, PEOP. REP. CHINA) 12 juillet 2006 (2006-07-12)
- GUO Z P ET AL: "Silicon/disordered carbon nanocomposites for lithium-ion battery anodes", JOURNAL OF THE ELECTROCHEMICAL SOCIETY 2005 ELECTROCHEMICAL SOCIETY INC. US, vol. 152, no. 11, 2005, pages A2211-A2216, XP002673410, DOI: DOI:10.1149/1.2051847 cité dans la demande
- GUO Z P ET AL: "Optimizing synthesis of silicon/disordered carbon composites for use as anode materials in lithium-ion batteries", JOURNAL OF POWER SOURCES, ELSEVIER SA, CH, vol. 159, no. 1, 13 septembre 2006 (2006-09-13), pages 332-335, XP027937951, ISSN: 0378-7753 [extrait le 2006-09-13]

## Description

### Domaine technique de l'invention

L'invention concerne un procédé de fabrication d'un matériau composite silicium/carbone à partir de particules de silicium et d'un composé polymère carboné, le polymère carboné étant de l'alcool polyvinylique, faisant intervenir une étape de pyrolyse.

L'invention concerne également l'utilisation d'un tel matériau composite.

### État de la technique

Les batteries au lithium sont de plus en plus utilisées comme source d'énergie autonome, en particulier dans les équipements portables. Cette tendance s'explique par l'amélioration continue des performances des batteries au lithium, notamment des densités d'énergie massique et volumique nettement supérieures à celles des accumulateurs classiques nickel-cadmium (Ni-Cd) et nickel-hydrure métallique (Ni-MH).
Les matériaux à base de carbone, en particulier de graphite ont été développés avec succès et largement commercialisés comme matériaux électrochimiquement actifs d'électrode, en particulier, pour les batteries au lithium. Ces matériaux sont particulièrement performants du fait de leur structure lamellaire propice à l'intercalation et la desintercalation du lithium et de leur stabilité au cours des différents cycles de charge et de décharge. Toutefois, la capacité des anodes carbonées pour batteries lithium-ion a atteint sa valeur théorique, correspondant à la composition LiC₆.

Certains métaux susceptibles d'incorporer le lithium se sont révélés être des alternatives prometteuses au carbone. En particulier, avec une capacité théorique estimée à 3578 mAh/g (pour Si → Li₃,₇₅Si), le silicium semble être un candidat intéressant apte à améliorer les performances des électrodes des batterie Li-ion. Néanmoins, à l'heure actuelle, une exploitation viable des électrodes à base de silicium n'est pas envisageable car les batteries au lithium contenant de telles électrodes présentent des problèmes d'intégrité inhérents à la présence de silicium, notamment d'expansion volumique entrainant la fissuration de l'électrode à l'usage.

Récemment, des composites silicium/carbone dans lesquels le silicium est dispersé dans une matrice carbonée ont été proposés. Ce matériau actif pour électrode de batterie au lithium permettrait de maintenir l'intégrité de l'électrode après plusieurs cycles de charge-décharge.

Plusieurs procédés de fabrication de tels composites silicium/carbone, noté Si/C, ont été proposés dans la littérature, en particulier, des procédés mettant en œuvre des techniques de broyage énergétique et/ou de dépôt chimique en phase vapeur (CVD). Par ailleurs, des procédés de fabrication d'un composite silicium/carbone ont été mis au point afin d'améliorer la cohésion entre le silicium et le carbone dans le composite. En effet, le carbone permet de compenser les changements de structure des particules de silicium lors du cyclage, en particulier l'expansion volumique du silicium. La qualité du contact entre le carbone et le silicium influence, par conséquent, la tenue du matériau composite Si/C en cyclage.

Parmi les documents décrivant la préparation de matériaux composites silicium/carbone visant à remédier aux inconvénients ressortant de l'art antérieur, on peut citer la publication scientifique de Guo, Z. P., E. Milin, et al. « Silicon/Disordered Carbon Nanocomposites for Lithium-Ion Battery Anodes », Journal of The Electrochemical Society, 152(11) ; A2211-A2216, (2005). Guo et al. décrit la production de nanocomposites silicium/carbone désordonné pour des matériaux d'électrodes, positive et négative, en utilisant de l'alcool polyvinylique, noté PVA pour l'acronyme anglais «PolyVinyl Alcohol», comme précurseur carboné. Le procédé consiste à enrober des particules de silicium, noté Si, avec du PVA par broyage mécanique d'un mélange Si/PVA afin d'obtenir un précurseur Si-PVA puis d'effectuer ensuite une pyrolyse du précurseur Si-PVA dans une atmosphère d'argon, à différentes températures allant de 600°C à 1000°C. Le composite Si/C donnant les meilleures résultats est obtenu à partir de 90% en masse de PVA et 10% en masse de Si et présente une capacité réversible de 800 mAh/g au 20^{ième} cycle. Néanmoins, Guo et al. est silencieux concernant la tenue des nanocomposites Si-C ainsi obtenues au-delà du 20^{ième} cycle.

Le document de Xing Fan et al. « Electrospinning préparation of nanosilicon/disordered carbon composite as anode materials in Li-ion battery », Electrochemical and Solid-State Letters (2009) 12, 10, A199-A201 décrit un procédé de fabrication d'un matériau composite silicium/carbone (Si/C). Le matériau Si/C est élaboré par électrofilage (« electrospinning » en anglais) à partir d'une solution contenant de l'alcool polyvinylique (PVA), des particules de silicium et un surfactant. Le composite Si/C est ainsi généré. Il est ensuite chauffé à 110°C puis une pyrolyse est réalisée à 500°C. Après 50 cycles, le composite Si/C présente une capacité réversible de 890mAh/g. Cependant, la matrice carbonée entourant les particules en silicium semble se détériorer progressivement à cause de l'expansion volumique du silicium.

Au regard de l'art antérieur, il existe un besoin d'obtenir un matériau composite Si/C apte à être utilisé comme matériau actif pour électrode, en particulier pour électrode négative, ayant de bonnes performances électrochimiques tout en présentant une tenue en cyclage améliorée.
Il existe notamment un besoin d'obtenir un matériau composite Si/C stable en cyclage pouvant être utilisé comme matériau actif d'électrode, en particulier, pour batterie au lithium. Le matériau composite doit, par exemple, présenter une forte et stable capacité spécifique en cyclage et ne pas être détérioré au cours des cycles.

### Objet de l'invention

L'invention a pour but de proposer un procédé de fabrication d'un matériau composite silicium/carbone apte à surmonter les inconvénients de l'art antérieur, en particulier, permettant l'obtention d'un matériau composite Si/C ayant une excellente tenue mécanique lors des cyclages et une durée de vie allongée.

On tend vers cet objet par les revendications annexées.

### Description sommaire des dessins :

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente des courbes correspondant à des mesures de calorimétrie différentielle à balayage d'un alcool polyvinylique à différentes températures.
- La figure 2 représente deux courbes de cyclage à une température de 20°C, en mode galvanostatique, d'une pile bouton B10/90 selon un mode de réalisation particulier de l'invention, comparativement à une pile bouton B_{c}10/90 de l'état de l'art.
- La figure 3 représente deux courbes de cyclage à une température de 20°C, en mode galvanostatique, d'une pile bouton B10/90-2 selon un autre mode de réalisation particulier de l'invention, comparativement à une pile bouton B_{c}10/90 de l'état de l'art.

### Description de modes particuliers de réalisation

Un procédé de fabrication d'un matériau composite silicium/carbone comprend une étape de réticulation d'un matériau composite silicium/polymère afin d'obtenir un matériau composite silicium/polymère dans lequel le polymère est au moins partiellement réticulé suivie d'une pyrolyse dudit matériau composite silicium/polymère réticulé. Pour des raisons de simplification, on utilisera l'écriture abrégée Si/C pour silicium/carbone dans la suite de la description.

Le procédé de fabrication d'un matériau composite Si/C comprend une première étape consistant à fournir un matériau composite silicium/polymère, noté Si/polymère dans la suite de la description, constitué par un matériau à base de silicium et le polymère. Le matériau à base de silicium est, par exemple, du silicium, un alliage de silicium/aluminium ou tout autre matériau comportant au moins 50% de silicium (monocristallin, polycristallin, amorphe).

On entend par matériau composite un matériau solide hétérogène obtenu en associant au moins deux phases dont les qualités respectives se complètent pour former un matériau aux performances globales améliorées.

Le matériau composite Si/polymère initial est obtenu à partir de particules de matériau à base de silicium et d'un composé polymère carboné selon tout procédé connu. On peut citer, par exemple et de façon non limitative, des procédés mettant en œuvre des techniques de broyage énergétique et/ou d'atomisation-séchage, technique également connue sous le nom anglais « spray drying », et/ou sol-gel.

Le matériau composite Si/polymère est, de préférence, formé par des noyaux de silicium recouverts d'un revêtement en polymère.

Les particules de silicium se présentent généralement sous la forme d'une poudre. Les particules de silicium peuvent être des particules micrométriques, par exemple, dont le diamètre moyen pour des particules de silicium sphériques est compris entre 1 à 200 micromètres, de préférence entre 1 à 45 micromètres, de préférence entre 1 et 15 micromètres.

Les particules de silicium peuvent, également, être des particules nanométriques, par exemple, dont le diamètre moyen pour des particules de silicium sphériques est compris entre 5 à 1000 nanomètres, de préférence entre 5 à 200 nanomètres.

Le composé polymère carboné est un précurseur du carbone et est apte à être réticulé.

On entend par réticulation, la formation d'un ou de plusieurs réseaux tridimensionnels par création de liaisons entre les chaînes macromoléculaires du composé polymère carboné initial. La réticulation peut être partielle avec la formation d'une structure partiellement tridimensionnelle.

Certains composés polymère sont connus pour être réticulables c'est-à-dire pouvant subir une réticulation dans des conditions particulières (chauffage, rayonnements ultra-violet, etc), en présence éventuellement d'un durcisseur ou d'un catalyseur. On peut citer, par exemple et de façon non limitative, les polymères contenant un groupement hydroxyle comme, par exemple, l'alcool polyvinylique, noté PVA.

On choisira parmi l'ensemble des composés polymères carbonés réticulables, l'alcool polyvinylique (PVA).

Le matériau composite Si/polymère est obtenu à partir d'une quantité de particules de matériau à base de silicium comprise entre 50% et 1% massique et d'une quantité du composé polymère carboné comprise entre 50% et 99% massique, la somme des quantités étant égale à 100%.
Le matériau composite Si/polymère est, avantageusement, obtenu à partir d'une quantité de particules de matériau à base de silicium comprise entre 20% et 5% massique et d'une quantité du composé polymère carboné comprise entre 80% et 95% massique. La somme des quantités de particules de matériau à base de silicium et de composé polymère carboné est égale à 100%.

Le matériau composite Si/polymère est, de préférence, obtenu à partir de 10 % massique de particules de matériau à base de silicium et de 90% massique du composé polymère carboné.
Après obtention du matériau composite Si/polymère, on effectue la réticulation au moins partielle et, de préférence totale, du polymère présent au sein du matériau composite Si/polymère de manière à obtenir un matériau composite silicium/polymère réticulé, noté Si/polymère réticulé, dans la suite de la description. On entend par réticulation partielle, un taux de réticulation supérieur ou égal à 50%.
La réticulation peut, classiquement, être chimique, thermique (réalisée sous l'action de la chaleur, par exemple avec une température supérieure à 50°C) et/ou encore radicalaire, par exemple initiée par irradiation IR, UV ou d'électrons.

Parmi les techniques classiques de réticulation, on choisit la réticulation thermique car elle est simple à mettre en œuvre, peu coûteuse et peut être réalisée dans des conditions douces tout en permettant l'obtention d'un taux de réticulation élevé. On pourra à ce propos se reporter à la méthode de réticulation proposée par Senkevich et al., dans la publication scientifique, « Thermal Transformations of Polyvinyl Alcohol as a Source for the Préparation of Carbon Materials », Solid fuel chemistry, 41(1):51-58, (2007).

La réticulation thermique est réalisée sous air. Par la suite on décrira les différents modes de réalisation sous air, mais l'homme du métier pourra facilement utiliser l'atmosphère oxydante de son choix. Ainsi, contrairement à une pyrolyse classiquement réalisée à haute température et sous atmosphère inerte, la réticulation thermique nécessite des conditions douces avec une température de traitement thermique peu élevée, sans nécessité d'un gaz inerte.

L'étape de réticulation est suivie d'une étape de pyrolyse du matériau composite Si/polymère réticulé jusqu'à obtention dudit matériau composite Si/C final.

L'étape de pyrolyse subséquente à l'étape de réticulation a pour but la carbonisation du polymère réticulé constituant le matériau composite Si/polymère, pour le transformer en carbone. La carbonisation est, classiquement, réalisée à une température comprise entre 600°C et 1100°C, sous atmosphère inerte, par exemple sous flux d'azote.

La réticulation joue un rôle bénéfique quelque soit le type du composé polymère carboné réticulable, initialement utilisé, pour former le matériau composite Si/C.

En effet, lors de la montée en température d'une étape de pyrolyse classique, le polymère contenu dans un matériau composite Si/polymère fond avant de se décomposer en carbone. Le fluage du polymère durant la pyrolyse mène alors à une détérioration de la morphologie du composite Si/polymère. A titre d'exemple, lorsque le matériau composite Si/polymère obtenu par atomisation-séchage a une morphologie initiale sphérique, le fluage peut induire la perte d'enrobage du polymère autour du silicium ou une déformation de la couche d'enrobage formée par le polymère.
De plus, le fluage du polymère au sein du matériau composite Si/polymère mène à la perte de l'homogénéité du composite. Or, dans le matériau composite Si/C, l'absence d'enrobage de carbone autour du silicium, se traduisant par une hétérogénéité du composite, limite les effets bénéfiques du carbone.
La réticulation permet la formation d'un réseau tridimensionnel du polymère entraînant le durcissement du polymère, ce qui le rend infusible. La réticulation diminue, par conséquent, significativement ou totalement, ce phénomène de fluage lors de l'étape de pyrolyse.
Le composé polymère carboné peut être réticulé à différents taux de réticulation correspondant au nombre de chaînes intervenant dans la liaison entre les chaînes macromoléculaires d'un composé polymère carboné. Le taux de réticulation peut être déterminé par tout procédé connu, par exemple, par spectrométrie infrarouge à transformée de Fourier, noté FTIR, et calorimétrie différentielle à balayage, noté DCS. Ainsi, selon le degré de réticulation, le composé polymère réticulé sera plus ou moins résistant au fluage.

L'étape de réticulation préalable à la pyrolyse favorise la tenue en cyclage des matériaux composites Si/C préparés à partir d'un composé polymère précurseur carboné.

Le composé polymère carboné est de l'alcool polyvinylique (PVA).

Le matériau composite Si/polymère initial est obtenu, de préférence, par broyage d'un mélange de particules de silicium et de PVA. Alternativement, la lyophilisation ou l'atomisation séchage sont également des méthodes de préparation de choix.

Pour obtenir le matériau composite Si/PVA réticulé, la réticulation est réalisée par oxydation sous air à une température comprise entre 150°C et 210°C. En particulier, la réticulation est réalisée par oxydation sous air à une température égale à 200°C ± 10°C, c'est-à-dire entre 190°C et 210°C. L'oxydation sous air dure au moins 10 heures, de préférence entre 10 heures et 20 heures, de manière à obtenir la réticulation du polymère tout en limitant sa déformation liée à l'augmentation de la température.

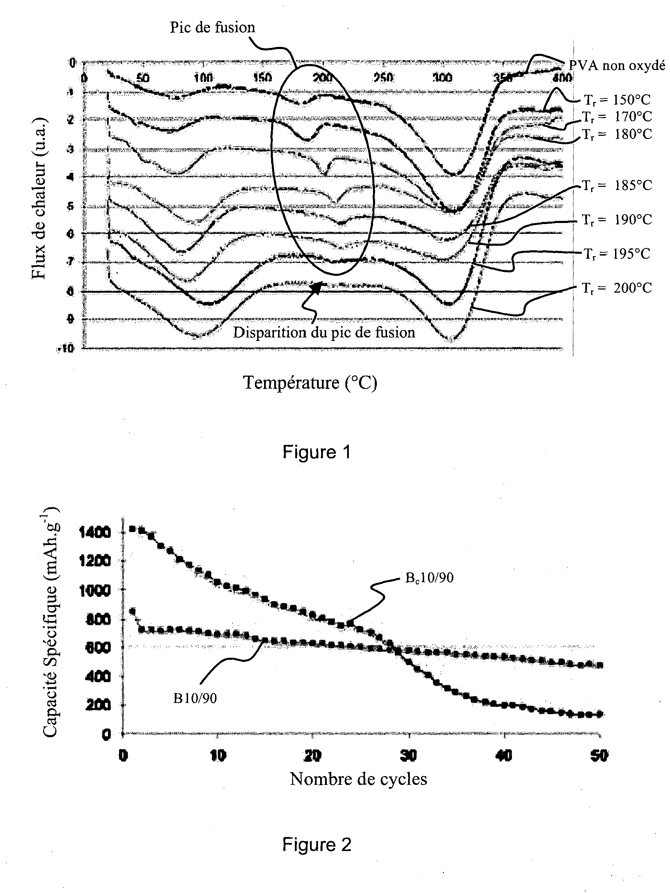

Des mesures par DSC du PVA réticulé à différentes températures ont été effectuées et représentées à la figure 1. Pour ce faire, du PVA a été réticulé à des températures de réticulation, notée Tᵣ, variant entre 150°C et 200°C, dans un four à moufle selon le traitement thermique suivant :
- une montée en température à une vitesse de 10°C/min jusqu'à la température Tᵣ choisie,
- un plateau à la température Tᵣ durant 16h et,
- une descente en température jusqu'à la température ambiante (de l'ordre de 20°C) à une vitesse de 10°C/min.

Comme représenté à la figure 1, un pic de fusion du PVA est identifié entre 150°C et 220°C. L'augmentation de la température Tᵣ élève le taux de réticulation du PVA et donc limite la fusion du PVA. En effet, on constate une disparition effective du pic de fusion du PVA pour une oxydation du PVA à 200°C (voir la flèche à la figure 1). Cette étude permet de déterminer la température Tᵣ efficace pour l'étape de réticulation et justifie une sélection de la température de Tᵣ à 200°C spécifique au PVA.

Cette étude peut être généralisée pour déterminer la température de réticulation thermique spécifique selon le composé polymère réticulable choisi dans le procédé de fabrication selon l'invention, évitant le fluage de ce composé polymère carboné au sein du matériau composite Si/polymère avant pyrolyse.

Après réticulation, le matériau composite Si/PVA réticulé subit une pyrolyse à une température comprise entre 600°C et 1100°C, sous atmosphère inerte, par exemple, sous flux d'azote.

Selon une variante, le matériau composite Si/polymère initial est obtenu, de préférence, par atomisation-séchage d'une dispersion de particules de silicium dans une solution de PVA. L'opération d'atomisation-séchage est une opération couramment employée notamment dans le domaine pharmaceutique et agroalimentaire. Cette opération permet d'encapsuler les particules de silicium par le PVA. Cette opération d'atomisation-séchage consiste à pulvériser une suspension en fines gouttelettes à travers une buse, afin d'obtenir une poudre après passage dans l'atomiseur sous un flux de chaleur. A l'issue de l'atomisation, la poudre récoltée est constituée de particules de silicium enrobées de PVA. L'atomisation-séchage est réalisée à l'aide d'un atomiseur et permet d'obtenir un matériau composite Si/C sous forme de particules essentiellement sphériques.

Le matériau composite Si/carbone obtenu à partir du procédé de fabrication décrit ci-dessus présente des propriétés électrochimiquement améliorées et peut être utilisé comme matériau actif d'une électrode. On entend par matériau actif d'une électrode, un matériau participant aux réactions électrochimiques mises en jeu au sein de l'électrode.

En particulier, une électrode comprenant le matériau composite Si/carbone obtenu à partir du procédé de fabrication selon l'invention est particulièrement adaptée pour une utilisation dans une batterie au lithium.

Selon un mode de réalisation particulier, une batterie au lithium comporte une électrode contenant le matériau composite Si/C décrit ci-dessus et une électrode source d'ion lithium.

L'électrode contenant le matériau composite Si/C peut être composée d'une dispersion formée, selon tout procédé connu, par le composite Si/C obtenu à partir d'un procédé de fabrication décrit ci-dessus, et ayant préférentiellement subi un rebroyage, et un additif conducteur, par exemple, un carbone conducteur, et éventuellement, un liant destiné à assurer la cohésion mécanique, une fois le solvant évaporé.

Le liant est, classiquement, un liant polymère choisi parmi les polyesters, les polyéthers, les dérivés polymères de méthylméthacrylate, d'acrylonitrile, la carboxyle méthyle cellulose et ses dérivées, les latex de type styrène butadiène et leurs dérivés, les polyvinyles acétates ou polyacrylique acétate et les polymères de fluorure de vinylidène, par exemple, le difluorure de polyvinylidène (noté PVdF).

La batterie au lithium comporte, avantageusement, un électrolyte non-aqueux. De façon connue, l'électrolyte non-aqueux peut, par exemple, être constitué d'un sel de lithium comportant au moins un cation Li⁺, choisi parmi :
- du lithium bis[(trifluorométhyl)sulfonyl]imide (LiN(CF₃SO₂)₂), du lithium trifluorométhane sulfonate (LiCF₃SO₃), lithium bis(oxalato)borate (LiBOB), du lithium bis(perfluoroéthylsulfonyl)imide (LiN(CF₃CF₂SO₂)₂),
- des composés de formule LiClO₄, LiAsF₆, LiPF₆, LiBF₄, Lil, LiCH₃SO₃ ou LiB(C₂O₄)₂ et,
- des composés fluorés de formule LiR_{F}SO₃R_{F}, LiN(R_{F}SO₂)₂ ou LiC(R_{F}SO₂)₃ où R_{F} est un groupement choisi parmi un atome de fluor et un groupement perfluoroalkyle comportant entre un et huit atomes de carbone.

Le sel de lithium est, de préférence, dissout dans un solvant ou un mélange de solvants polaires aprotiques, par exemple, choisis parmi l'éthylène carbonate (noté "EC"), le propylène carbonate, le diméthylcarbonate, le diéthylcarbonate (noté "DEC"), le méthyléthylcarbonate.

### EXEMPLES

### Caractéristiques des composés de départ

- Silicium sous forme de particules sphériques ayant un diamètre moyen compris entre 100nm et 200nm, commercialisé par la société S'tile.
- alcool polyvinylique (PVA), hydrolysé à 80% molaire, ayant masse molaire 6000 g.mol.⁻¹ et commercialisé par la société Polyscience.

### Exemple 1 :

### - Synthèse d'un matériau composite Si10/C90

Un matériau composite Si/PVA est obtenu par broyage à sec, sous air, d'un mélange de 10% massique de particules de silicium et 90% massique de PVA. Pour ce faire, 0.8 g de particules de silicium et 7,2g de PVA sont intimement mélangés dans un broyeur centrifuge Retsch PM100 à l'aide d'un bol en acier 250ml avec 210g de billes en acier de 20 mm de diamètre. La durée du broyage est de 10h avec une vitesse de 500 tours/minute.

Le matériau composite Si/PVA obtenu est réparti de manière égale dans six creusets en alumine de 10 ml et introduit dans un four à moufle. Afin de réticuler le PVA, on applique le traitement thermique suivant sous air :
- une montée à une température jusqu'à 200°C avec une vitesse de 10°/min,
- un plateau en température à 200°C durant 16h et,
- une descente jusqu'à une température de 20°C avec une vitesse de 10°C/min.

A l'issue de ce protocole, une poudre de matériau composite Si/PVA réticulé est obtenue, dans lequel le PVA est réticulé à plus de 80%, idéalement 100%.

Pour finir, la poudre de matériau composite Si/PVA réticulé est pyrolysée dans un tube en quartz sous atmosphère d'azote avec un débit de flux de 100ml/min. On applique alors une pyrolyse selon le traitement thermique suivant :
- une montée en température jusqu'à 1050°C avec une vitesse de 10°/min,
- un plateau à une température de 1050°C durant 3h et
- une descente jusqu'à une température de 20°C avec une vitesse de 10°C/min.

A l'issue de cette étape, le matériau composite Si/C, référencé Si10/C90, est caractérisé par analyse élémentaire, noté IGA pour l'acronyme anglais « Instrumental Gas Analysis ». Les résultats obtenus montrent que le matériau composite Si/C est constitué de 44% massique de silicium et 56% massique de carbone.

### - Préparation d'une batterie au lithium de type "pile bouton" B10/90

Une batterie au lithium de type "pile bouton", B10/90, a été réalisée selon un procédé classique à partir du matériau composite Si10/C90.

En particulier, la batterie au lithium comporte une électrode positive contenant le composite Si10/C90, une électrode négative au lithium et un séparateur de type Celgard en polymère.

L'électrode positive est fabriquée par mélange intime de 80 % massique de matériau Si10/C90 agissant en tant que matériau électrochimiquement actif, 10 % massique de noir de carbone comme additif conducteur et 10% massique d'hexafluorure de polyvinylidène comme liant. Le mélange obtenu est alors déposé sur un collecteur de courant en cuivre.

L'électrode négative est formée par un film circulaire de 14mm de diamètre et 200µm d'épaisseur, déposé sur un feuillard en cuivre servant de collecteur de courant. Le séparateur est imbibé par un électrolyte liquide à base de LiPF6 à une concentration de 1mol.L⁻¹ dans un mélange EC/ DEC en volume de solvant 1/1.

### Exemple comparatif 1' :

### - Synthèse d'un matériau composite c-Si10/C90 et d'une batterie au lithium B_{c}10/90

A titre comparatif, un matériau composite c-Si10/C90 a été obtenu selon un mode opératoire strictement identique à celui de l'exemple 1, à l'exception du fait que le matériau composite Si/PVA ne subit pas de réticulation avant la pyrolyse. L'analyse élémentaire IGA du matériau composite c-Si10/C90 est constituée de 77% massique de silicium et 23% massique de carbone.

Une batterie au lithium de type "pile bouton », notée B_{c}10/90, comprenant le matériau composite c-Si10/C90 a été réalisée selon un mode opératoire identique à celui de l'exemple 1.

Les deux batteries au lithium B10/90 et B_{c}10/90 ont ensuite été testées à une température de 20°C, en mode galvanostatique, à régime C/20 dans une fenêtre de potentiel comprise entre 1.2V et 0.01V vs. Li⁺/Li.

Les courbes de cyclage galvanostatique obtenues sont représentées à la figure 2. La figure 2 montre une chute drastique de la capacité spécifique de la batterie B_{c}10/90 au-delà du 25^{ième} cycle. En revanche, les performances électrochimiques de la batterie B10/90 se maintiennent à une valeur de capacité spécifique supérieure à 500 mAh/g après le vingtième cycle, sans chute de performance.

### Exemple 2 :

### - Synthèse d'un matériau composite Si10/C90-2 et d'une batterie au lithium B10/90-2

La synthèse d'un composite Si10/C90-2 est réalisée par atomisation-séchage. En particulier, 7.2g de PVA sont dissous dans 100ml d'eau déionisée à 60°C sous agitation vigoureuse durant 20min à l'aide d'un agitateur magnétique. A l'issue de cette étape, le polymère est entièrement dissous et 0.8g de silicium est ajouté dans la solution pour obtenir une suspension qui sera agitée durant 20min. La suspension est ensuite nébulisée dans un atomiseur B-290 commercialisé par la société BUCHI, sous air chaud à 140°C.

Le matériau composite Si/PVA est ensuite réticulé selon un protocole identique à celui de l'exemple 1.

Pour finir, le matériau composite Si/PVA réticulé obtenu est pyrolysé dans un tube en quartz sous atmosphère d'azote avec un débit de 200ml/min. On applique alors une pyrolyse selon le traitement thermique suivant :
- une montée en température jusqu'à 850°C avec une vitesse de 10°/min,
- un plateau à une température de 850°C durant 3h et
- une descente jusqu'à une température de 20°C avec une vitesse de 10°C/min.

Les résultats de l'analyse élémentaire IGA montrent que le matériau composite Si10/C90-2 est constitué de 44% massique de silicium et 56% massique de carbone.

Une batterie au lithium de type "pile bouton », notée B10/90-2, comprenant le matériau composite Si10/C90-2 a été réalisée selon un mode opératoire identique à celui de l'exemple 1.

### Exemple comparatif 2' :

### - Synthèse d'un matériau composite c-Si10/C90-2 et d'une batterie au lithium B_{c}10/90-2

A titre comparatif, un matériau composite c-Si10/C90-2 a été obtenu selon un mode opératoire strictement identique à celui de l'exemple 2, à l'exception du fait que le matériau composite Si/PVA ne subit pas de réticulation avant la pyrolyse. Les résultats de l'analyse élémentaire IGA montrent que le matériau composite c-Si10/C90-2 est constitué de 77% massique de silicium et 23% massique de carbone.

Une batterie au lithium de type "pile bouton », notée B_{c}10/90-2, comprenant le matériau composite c-Si10/C90-2 a été réalisée selon un mode opératoire identique à celui de l'exemple 2.

Les deux batteries au lithium B10/90-2 et B_{c}10/90-2 ont été testées à une température de 20°C, en mode galvanostatique, à régime C/20 dans une fenêtre de potentiel comprise entre 1.2V et 0.01V vs. Li⁺/Li.

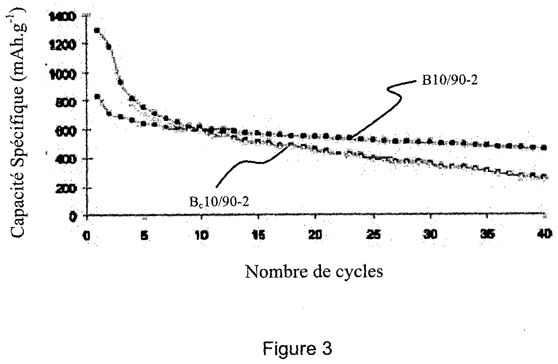

Les courbes de cyclage galvanostatique obtenues sont représentées à la figure 3. Comme pour l'exemple 1, la figure 3 montre une chute drastique de la capacité spécifique de la batterie B_{c}10/90-2 au-delà du 25eme cycle contrairement à la batterie B10/90-2 qui maintient une valeur de capacité spécifique supérieure à 500 mAh/g après le vingtième cycle, sans chute de performance.

Ces résultats illustrent l'effet bénéfique de l'étape de réticulation avant la pyrolyse sur la tenue en cyclage du matériau composite Si/C. La réticulation du PVA permet d'augmenter, significativement, la quantité de carbone au sein du matériau composite Si/C comparativement à un PVA non réticulé. Les particules de silicium sont recouvertes par une couche de carbone plus épaisse et uniforme qui empêche la perte de contact électrique avec le reste de l'électrode et est apte à absorber les changements de volume répétés du silicium lors de l'intercalation et la désintercalation du lithium.

Le procédé de fabrication selon l'invention est remarquable en ce qu'il est facile à mettre en œuvre et peu coûteux. Le procédé de fabrication fournit un matériau composite Si/C ayant des propriétés électrochimiques améliorées, et stable en cyclage. Le procédé de fabrication permet d'améliorer la qualité de l'enrobage carbone autour du silicium dans le matériau composite Si/C et d'augmenter la durée de vie d'une électrode pour batterie au lithium contenant un tel matériau. En particulier, le matériau composite Si/C obtenu par le procédé présente un taux de carbone élevé et une excellente cohésion entre le silicium et le carbone, le rendant particulièrement efficace comme matériau électrochimiquement actif d'une électrode, en particulier, pour batterie au lithium.

## Revendications

1. Procédé de fabrication d'un matériau composite silicium/carbone **caractérisé en ce qu'**il comprend les étapes successives suivantes :
- fournir un matériau composite silicium/polymère formé par des particules de silicium enrobées d'un revêtement polymère carboné, précurseur du carbone et apte à être réticulé, le polymère carboné étant de l'alcool polyvinylique (PVA),
- effectuer une réticulation au moins partielle du polymère du matériau composite silicium/polymère de manière à obtenir un matériau composite silicium/polymère réticulé, le polymère ayant un taux de réticulation supérieur ou égal à 50%, ladite réticulation étant réalisée par oxydation sous air à une température comprise entre 150°C et 210°C, pendant une durée d'au moins 10 heures, et
- pyrolyser le matériau composite silicium/polymère réticulé jusqu'à obtention dudit matériau composite silicium/carbone, ledit matériau composite silicium/carbone étant formé par des particules de silicium enrobées d'une couche de carbone.

2. Procédé selon la revendication 1, **caractérisé en ce que** la réticulation est réalisée par oxydation sous air à une température égale à 200°C ± 10°C.

3. Procédé selon l'une des revendications 1 et 2, **caractérisé en ce que** le matériau composite silicium/polymère est obtenu à partir d'une quantité de particules de silicium comprise entre 50% et 1% massique et d'une quantité du composé polymère carboné comprise entre 50% et 99% massique, la somme des quantités étant égale à 100%.

4. Procédé selon l'une quelconque des revendications 1 à 3, **caractérisé en ce que** le matériau composite silicium/polymère est obtenu à partir de 10 % massique de particules de silicium et de 90% massique du composé polymère carboné.

5. Electrode comprenant un matériau composite silicium/carbone susceptible d'être obtenu par le procédé de fabrication selon l'une quelconque des revendications 1 à 4.

6. Batterie au lithium comprenant au moins une électrode selon la revendication 5.

7. Utilisation d'une électrode selon la revendication 5, dans une batterie au lithium.

## Patentansprüche

1. Verfahren zur Herstellung eines Silicium/Kohlenstoff-Verbundmaterials, **dadurch gekennzeichnet, dass** es die folgenden aufeinanderfolgenden Schritte umfasst:
- Bereitstellen eines Silicium/Polymer-Verbundmaterials, das aus Teilchen von Silicium gebildet wird, die mit einer Beschichtung aus kohlenstoffhaltigem Polymer, einem Vorläufer von Kohlenstoff, und der dafür geeignet ist, um vernetzt zu werden, umhüllt sind, wobei das kohlenstoffhaltige Polymer Polyvinylalkohol (PVA) ist,
- Bewirken einer mindestens teilweisen Vernetzung des Polymers des Silicium/Polymer-Verbundmaterials, um ein vernetztes Silicium/Polymer-Verbundmaterial zu erhalten, wobei das Polymer einen Vernetzungsgrad größer oder gleich 50 % aufweist, wobei die Vernetzung durch Luftoxidation bei einer Temperatur zwischen 150 °C und 210 °C während einer Dauer von mindestens 10 Stunden durchgeführt wird, und
- Pyrolysieren des vernetzten Silicium/Polymer-Verbundmaterials bis zum Erhalten des Silicium/Kohlenstoff-Verbundmaterials, wobei das Silicium/Kohlenstoff-Verbundmaterial aus Teilchen von Silicium gebildet wird, die mit einer Schicht aus Kohlenstoff umhüllt sind.

2. Verfahren nach Anspruch 1, **dadurch gekennzeichnet, dass** die Vernetzung durch Luftoxidation bei einer Temperatur gleich 200 °C ± 10 °C durchgeführt wird.

3. Verfahren nach einem der Ansprüche 1 und 2, **dadurch gekennzeichnet, dass** das Silicium/Polymer-Verbundmaterial aus einer Menge an Teilchen von Silicium zwischen 50 Massen-% und 1 Massen-% und aus einer Menge an kohlenstoffhaltiger Polymerverbindung zwischen 50 Massen-% und 99 Massen-% erhalten wird, wobei die Summe der Menge gleich 100 % ist.

4. Verfahren nach einem der Ansprüche 1 bis 3, **dadurch gekennzeichnet, dass** das Silicium/Polymer-Verbundmaterial aus 10 Massen-% Teilchen von Silicium und 90 Massen-% der kohlenstoffhaltigen Verbindung erhalten wird.

5. Elektrode, umfassend ein Silicium/Kohlenstoff-Verbundmaterial, das durch das Herstellungsverfahren nach einem der Ansprüche 1 bis 4 erhalten werden kann.

6. Lithiumbatterie, umfassend mindestens eine Elektrode nach Anspruch 5.

7. Verwendung einer Elektrode nach Anspruch 5, in einer Lithiumbatterie.

## Claims

1. A method of producing a silicon/carbon composite material **characterized in that** it comprises the following successive steps:
- providing a silicon/polymer composite material formed by silicon particles coated with a carbon-based polymer coating, a carbon precursor and capable of being crosslinked, the carbon-based polymer being polyvinyl alcohol (PVA),
- performing at least partial crosslinking of the polymer of the silicon/polymer composite material so as to obtain a crosslinked silicon/polymer composite material, the polymer having a crosslinking rate greater than or equal to 50%, said crosslinking being carried out by oxidation in air at a temperature between 150 ° C and 210 ° C, for a period of at least 10 hours, and,
- pyrolyzing the crosslinked silicon/polymer composite material until obtaining said silicon/carbon composite material, said silicon/carbon composite material being formed by silicon particles coated with a carbon layer.

2. The method according to claim 1, **characterized in that** cross-linking is performed by oxidation in air at a temperature equal to 200°C ± 10°C.

3. The method according to any one of claims 1 and 2, **characterized in that** the silicon/polymer composite material is obtained from a quantity of silicon particles comprised between 50% and 1% by weight and a quantity of the carbonaceous polymer compound comprised between 50% and 99% by weight, the sum of the quantities being equal to 100%.

4. The method according to any one of claims 1 to 3, **characterized in that** the silicon/polymer composite material is obtained from 10% by weight of silicon particles and 90% by weight of the carbonaceous polymer compound.

5. An electrode comprising a silicon/carbon composite material able to be obtained by the method of producing according to any one of claims 1 to 4.

6. A lithium battery comprising at least one electrode according to claim 5.

7. The use of an electrode according to claim 5, in a lithium battery.
